# EUROPEAN PATENT APPLICATION

(11) **EP 3 587 076 A1**
(43) Date of publication of application: **01.01.2020**
(21) Application number: 19181526.5
(22) Date of filing: 20.06.2019
(51) Int. Cl.: B29C 64/205

(54) **FILM FOR MANUFACTURING PACKAGINGS**

(30) Priority: 21.06.2018 IT 201800006533
(71) Applicant: Galloplastik S.r.l., 30015 Chioggia (VE) (IT)
(72) Inventor: TIOZZO GOBETTO, Eugenio, 30015 Chioggia VE (IT)
(74) Representative: Modiano, Micaela Nadia

(57) **Abstract**

A film (10) for manufacturing packagings, comprising a backing sheet (11) and a plurality of extruded elements (13), which are associated at least partially with the backing sheet (11) and are provided by direct deposition on the backing sheet (11).

The invention also relates to the method for providing the film (10).

## Description

The present invention relates to a film for manufacturing packagings.

The invention relates also to the method for providing such a film.

Currently, in order to package products, allowing the buyer to see them inside the package, packagings made of plastic and/or paper material are used which have one or more transparent portions made of plastic material and adapted to ensure visual contact. Packagings made of plastic material, which allow the transpiration of the goods, such as for example totally or partially meshed bags, are instead used for packaging horticultural products, floral products, or the like.

All these types of packaging are usually in rolls to be unrolled and closed during bagging in automatic machines, or in ready-to-use bags.

In order to obtain a packaging in which information on the goods contained and on the producing company can be provided, there must be one or more continuous film portions on which it is possible to print the text.

In order to achieve this aim, packagings made of plastic material, paper or other materials are known which are provided starting from a backing sheet that comprises one or more through openings, covered by a portion of transparent plastic, optionally perforated, or of an already formed mesh made for example of plastic, cotton or other materials.

Normally, the backing sheet is made of paper and/or plastic and/or the like in order to obtain these packagings.

This backing sheet is subjected to a series of preliminary operations such as for example perforation, printing, die-cutting, and cutting.

In this step, open regions which pass through the thickness of the sheet are formed on the backing sheet.

Separately, a mesh, for example by means of weaving or extrusion in a die, and/or a sheet made of transparent plastic material, for example extrusion, are provided.

As an alternative, the mesh and/or the sheet of transparent plastic material can be purchased ready to use.

Finally, the operation for fixing the mesh and/or the optionally perforated transparent plastic sheet to the backing sheet is performed: the mesh and/or the transparent plastic sheet are cut in suitable portions, superimposed on a corresponding open region, and fixed to the backing sheet by means of a heat-sealing or gluing operation in the perimetric portion proximate to the open region.

These known techniques have some drawbacks.

In order to be able to fix mesh portions or transparent plastic sheet portions to the backing sheet, they must be provided separately.

Usually, a sheet of mesh or transparent plastic is provided which is rolled up in rolls and is subsequently cut into portions.

The portions of mesh or transparent plastic must therefore be arranged at the openings of the backing sheet in order to be able to be heat-sealed or glued.

In order to obtain a packaging, such as the ones described previously, a series of operations that lead to a long, difficult and complex method is therefore necessary.

Furthermore, considerable costs related to production and working hours and the need for considerable storage volumes arise.

Furthermore, cutting portions from the sheet of mesh or transparent plastic can create cuttings of non-reusable material, with a consequent waste of material.

Moreover, regardless of the shape of the open region, a quadrangular mesh portion with dimensions that allow to completely contain the open region, is applied. This is done in order to make the method faster, but it leads to an unnecessary waste of mesh in the regions where it faces a continuous portion of the backing sheet.

Moreover, there is a significant consumption of adhesives and the presence of flaws in the final product deriving from the manufacturing method is not infrequent.

Not least, considerable costs for the disposal of these packagings after use arise. In order to be able to subsequently recycle the packaging it may be necessary to separate the various layers, an operation that is not easy and is expensive. Moreover, the adhesives used for fixing the mesh and/or transparent plastic portions to the backing sheet may be non-recyclable.

The aim of the present invention is to provide a film for manufacturing packagings that is capable of improving the background art in one or more of the aspects mentioned above.

Within the scope of this aim, an object of the invention is to provide a film for manufacturing packagings that can be provided more quickly, cheaply and easily than similar films that are commercially available.

Another object of the invention is to provide a film for manufacturing packagings that allows to reduce the storage volumes necessary for the storage of its basic elements.

A further object of the invention is to provide a film for manufacturing packagings that allows to reduce the basic materials necessary for its production, for equal characteristics, and to eliminate the wastes of material and the presence of flaws on the finished product.

Another object of the invention is to provide a film for manufacturing packagings that allows greater versatility in production and use.

Yet another object of the invention is to provide a film for manufacturing packagings that reduces the environmental impact with respect to similar films of a known type.

Another object of the invention is to provide a film for manufacturing packagings that is highly reliable, relatively easy to provide and at competitive costs.

This aim and these and other objects that will become better apparent hereinafter are achieved by a film for manufacturing packagings, comprising a backing sheet, characterized in that it comprises a plurality of extruded elements, which are associated at least partially with said backing sheet and are provided by direct deposition on said backing sheet.

Further characteristics and advantages of the invention will become better apparent from the description of a preferred but not exclusive embodiment of the film for manufacturing packagings according to the invention, illustrated by way of non-limiting example in the accompanying drawings, wherein:
Figure 1 is a view of a method for providing a film for manufacturing packagings according to the invention;
Figure 2 is a schematic view of a step of a method for providing a film for manufacturing packagings according to the invention;

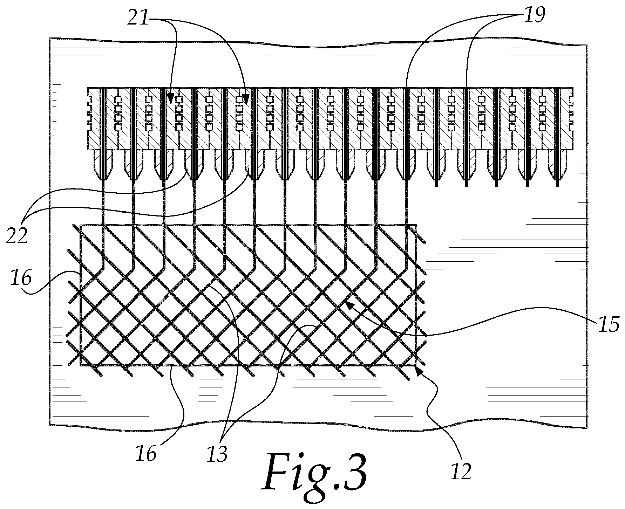

Figure 3 is a schematic view of a different method for providing a film for manufacturing packagings according to the invention;
Figure 4 is a schematic view of a different method for providing a film for manufacturing packagings according to the invention;
Figure 5 is a view of a portion of a film according to the invention;
Figure 6 is a view of a detail of an apparatus for providing a film according to the invention;
Figure 7 is a view of a portion of a film according to the invention in a particular embodiment;
Figure 8 is a view of an example of method for providing the film of Figure 7.

With reference to the figures, the film for manufacturing packagings according to the invention is generally designated by the reference numeral 10.

The film 10 comprises a backing sheet 11.

The sheet 11 is made of plastic and/or paper and/or similar material, preferably bioplastics and/or recyclable and/or biodegradable and/or compostable material.

The sheet 11 can be multilayer or monolayer.

In the examples shown in the figures, the backing sheet 11 has a plurality of open regions 12, such as for example die-cut portions, cuts or holes which pass through the thickness of the backing sheet 11.

The backing sheet 11, in some constructive variations not shown in the figures, does not have open regions, but it is a continuous sheet.

One of the particularities of the invention resides in that the film 10 comprises a plurality of extruded elements 13 provided with a printer 18 that is substantially comparable to a three-dimensional printer of a known type as regards operation but operates at considerably higher speeds and with a plurality of extruders that can be arranged both in series and in parallel.

The extruded elements 13 are made of material that can be heat-sealed to the material of the backing sheet 11 with which they are in contact.

Said extruded elements 13 are made of plastic material or the like, preferably bioplastics and/or recyclable and/or biodegradable and/or compostable material, such as for example PVA (polyvinyl alcohol), PLA (polylactic acid), or the one known by the trade name "Mater-bi" in the name of the firm Novamont in Novara.

As an alternative, the extruded elements 13 may not allow to be heat-sealed to the backing sheet 11; in this case it is possible to add adhesives on the extruded elements 13 or on the surface of the backing sheet 11, such as for example HMA adhesives (Hot-Melt Adhesive).

In particular, adhesives of the HMA type are reactivated by heat, and therefore they can be spread on the surface of the backing sheet 11 and, after the deposition of a hot extruded element 13, can be reactivated by gluing the element 13 to the backing sheet 11.

As an alternative, an HMA can be mixed with the basic polymer of the extruded elements 13 and can be reactivated during the heating step in the extruder.

In a further constructive variation, the extruded elements 13 are fixed to a backing sheet 11 made of porous material, penetrating the pores and gripping them.

These extruded elements 13 are deposited directly on the backing sheet 11 in order to provide reinforcements of the film 10 or of any holes that are present, to provide handles 14, commercial logos (not shown in the figures), complementary elements for openings that can be closed again (not shown in the figures), mesh portions 15 at the open regions 12.

These extruded elements 13 can be also used to provide gadgets, such as for example promotional wristbands or closure laces, by heat-sealing them only in localized points.

The extruded elements 13 can be made of material that is transparent or otherwise allows visual contact with the content of the packaging, and can have such dimensions as to close the open regions 12. In this case a packaging made of continuous, optionally non-transpirable material is obtained which has portions that allow to see what is present inside the packaging.

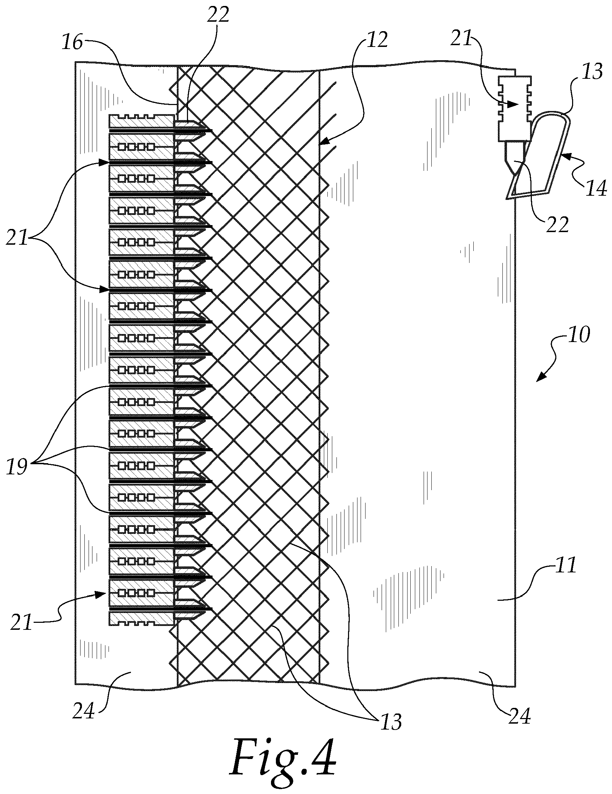

The extruded elements 13 adapted to provide handles 14 can be only partially associated with the backing sheet 11 and/or protrude therefrom, as shown in Figure 4.

In particular, it is possible to spread some portions of the backing sheet 11 with a heat-resistant ink, such as for example those of the Huber Group, Basf or Du Pont companies, adapted to prevent heat-sealing.

In a constructive variation not shown in the figures, in order to obtain a partial association of extruded elements 13 with the backing sheet 11 it is possible to use a backing sheet 11 composed, at least in some portions, of two or more coupled layers, of which at least one can be heat-sealed and at least one cannot be heat-sealed.

In order to provide mesh portions 15 at the open regions 12, the extruded elements 13 are, at least partially, associated with the backing sheet 11, by means of heat-sealing and/or gluing, proximate to the perimetric edges 16 of the open regions 12.

With reference to Figure 4, the backing sheet 11 can be constituted by a plurality of strips 24, which are arranged in a parallel manner, are interleaved by an open region 12, and are kept together by a plurality of extruded elements 13, for example to form a mesh.

In order to provide a film 10 according to the invention, one of the following methods can be used.

In a first method:
- the backing sheet 11 is provided and rolled up in a roll;
- the roll is unrolled, making the backing sheet 11 pass through a three-dimensional printer 18;
- a base plastic material 19 is passed through an extruder 21 of the printer 18, which comprises heating means 20;
- the three-dimensional printer 18, controlled by a processor that runs a preset program, melts the base plastic material 19 by virtue of the heating means 20 and extrudes it through the terminal nozzle 22 of the extruder 21, forming an extruded element 13;
- the extruded element 13 that exists the nozzle 22, at a temperature high enough to melt locally, at least partially, with the backing sheet 11, is deposited, in the direction of the arrow 23, on the backing sheet 11 according to the shape, thickness, direction and orientation chosen, heat-sealing itself at least partially on the backing sheet 11;
- the film 10 thus obtained is rolled up in a roll, after the hardening of the extruded elements 13, in order to be moved into the station for providing the packagings or be moved to a storage warehouse.

The expression "high enough temperature" is understood to mean a temperature on the order of 80-360°C.

The base plastic material 19 for providing the extruded elements 13 can be constituted, for example, by filaments wound in rolls or directly by granules.

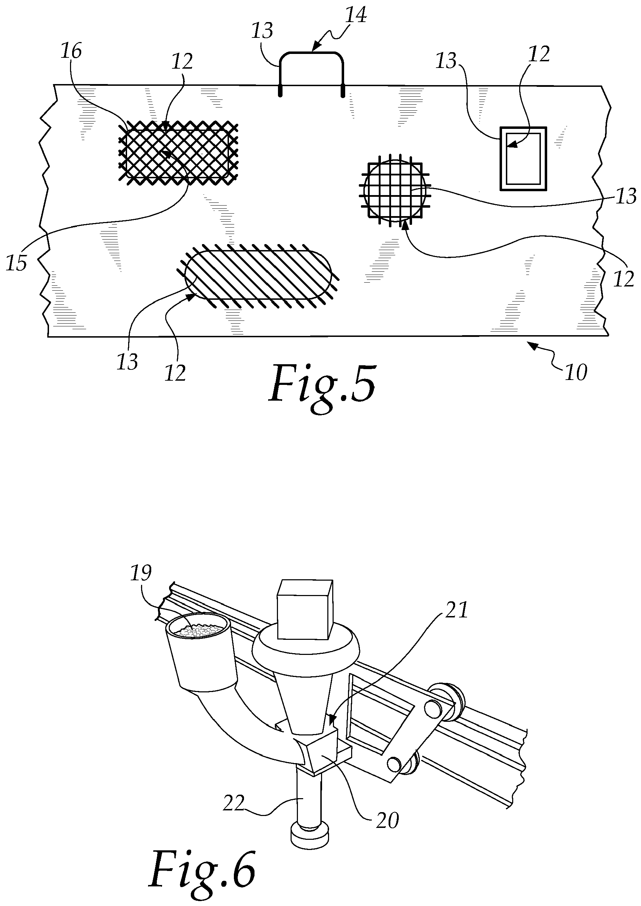

Figure 6 shows an extruder 21 which is used if the base plastic material 19 is constituted by granules. In this case, the method for providing the film 10 according to the invention becomes faster and cheaper. In fact, it is not necessary to melt the granules in order to provide the filaments and then melt the filaments again to extrude them, but it is sufficient to melt the granules directly, through the heating means 20, and extrude them through the extruder 22 in elements 13, in turn deposited directly on the backing sheet 11.

The film 10, before being rewound, can be pressed, at least in the portions of contact between the extruded elements 13, which are still soft, and the backing sheet 11, in order to improve the heat-sealing and/or reduce the thickness locally.

The rewinding of the film 10, after the deposition of the extruded elements 13, can be performed in a continuous or stepwise manner, depending on the manufacturing technique.

The packagings can be provided starting from a film 10 even immediately after the deposition of the extruded elements 13 by means of a continuous or stepwise method.

The extruders 21 can be multiple and can move independently of each other.

Each extruder 21 can have more than one nozzle 22.

Moreover, the printers 18 can be multiple and arranged in series.

In this manner it is possible to increase the speed of the method for providing a film 10, according to the invention.

The backing sheet 11 slides on a belt, not shown in the figures, for example made of silicone, in contact with the lower surface of the backing sheet 11 that allows the hardening of the extruded elements 13 and the subsequent removal from the belt, after hardening.

The belt is arranged between the backing sheet 11 and a lower surface 25.

The surface 25 on which the belt slides is in contact with the lower surface of the belt, in turn in contact with the backing sheet 11 subjected to the deposition of extruded elements 13. The surface 25 is cooled at a temperature on the order of 0-80°C, preferably between 20 and 30°C.

This allows not to ruin the backing sheet 11 during the deposition of extruded elements 13, because the heat of the extruded elements 13 is absorbed by the underlying surface 25 and not by the backing sheet 11.

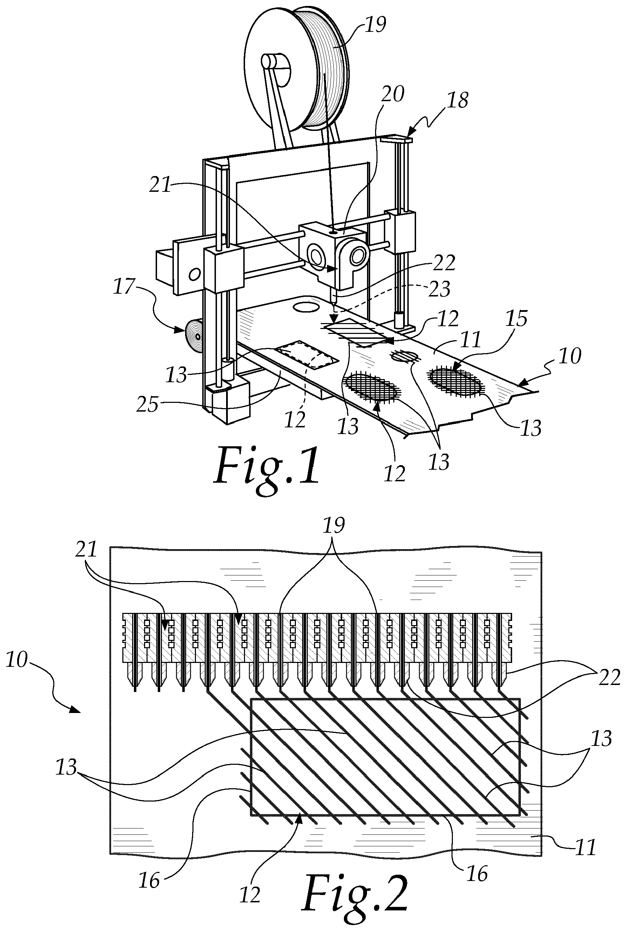

In a second method, shown schematically in Figure 1, the backing sheet 11 has a plurality of open regions 12 provided, for example, by die-cutting, and the printer 18 deposits the extruded elements 13 directly at the open regions, in order to form mesh portions 15, or close said open regions 12.

In a third method, not shown in the figures, the roll of the backing sheet 11 is unrolled in a continuous manner and passes through successive processing stations. In the first station the backing sheet 11 is made to pass through a die-cutter, in order to form opening regions 12, and in the subsequent stations through a three-dimensional printer 18 for depositing one or more extruded elements 13.

Subsequently, the film 10 can be rolled up in a roll or can move on to a further step for providing packagings.

This third method can be performed also in a stepwise manner.

In a fourth method, not shown in the figures:
- a backing sheet 11 is provided and rolled up in a roll 17;
- a roll 17 is unwound, making the backing sheet 11 pass through a three-dimensional printer 18;
- elements 13 are extruded through at least one extruder 21 of the printer 18, as in the previous methods;
- the extruded elements 13 are associated with the backing sheet 11 by means of the application of an adhesive on the extruded elements 13 and/or on the backing sheet 11, at least in the portions of contact with the extruded elements 13.

The backing sheet 11 can be subjected beforehand to an operation for obtaining one or more open regions that pass through the thickness of the backing sheet 11.

The backing sheet 11, in each of the above cited methods, can also be subjected beforehand to an operation for spreading locally a heat-resistant ink.

One of the advantages of these methods resides in that the printer 18 can comprise one or more extruders 21, which can move independently of each other.

Each extruder 21 can have, in turn, one or more nozzles 22.

In particular, it is possible to have a single extruder 21 to the side of the apparatus, connected by means of one or more ducts to all of the nozzles 22 of the apparatus. This allows to use apparatuses that are easier to handle and lightweight and can work at higher speeds than similar apparatuses with an extruder dedicated to the single nozzle, and/or arranged above a plurality of nozzles, that has to be moved with them during the extrusion steps. A faster and cheaper process is thus obtained, saving energy at the same time.

Furthermore, in this manner it is also possible to use a single extrusion point and use an extruder that has a greater size, mass and power.

The nozzles 22 can be arranged at a variable distance from the backing sheet 11, depending on the requirements. In the case of a distance on the order of a few microns, a pressing of the extruded element 13 occurs concurrently with the deposition, improving the fixing of the element 13 to the backing sheet 11.

The distance between each nozzle and the backing sheet is comparable to the thickness of the element being extruded and this ensures an adequate pressing of the extruded element on the backing sheet in order to facilitate heat-sealing and increase any penetration into the surface pores.

The element, during pressing, can flatten.

The term "comparable" in the present description refers to a distance which, depending on the deposition rate of the extruded element and on the shape of the nozzle, is contained in a range of measurements that can be smaller, equal or even greater than the thickness of said extruded element but sufficient to ensure adequate pressing and heat-sealing to the backing sheet.

This distance also depends on the type of base plastic material used.

The distance can then be adjusted automatically by the processor of the printer, at each pass, so as to remain constant between each nozzle and the previously deposited layer.

Furthermore, the printers 18 also can be multiple.

In this manner it is possible to provide the extruded elements necessary for the film rapidly, and since it is not necessary to provide separately the extruded elements or the mesh portions to be applied, a faster production than similar films of a known type is obtained.

Moreover, the extruded elements 13 of different material, color and thickness can be deposited on the same backing sheet 11. In this case, multiple different base plastic materials are used simultaneously.

By doing so, it is possible to provide handles and/or logos and/or reinforcements and/or mesh portions and/or complementary elements for openings that can be reclosed and/or gadgets and/or laces of any type by simply varying some parameters of the control program of the three-dimensional printer. This allows greater versatility in the provision and use of the film than those of the known type.

Furthermore, by extruding and depositing directly on the backing sheet the extruded elements there are no wastes of material. Moreover, the base plastic material is available in spools of filament and/or in granules and this allows to reduce the storage volumes needed to store it and to limit the costs for transport.

A spool of filament is easier to find than a roll of mesh and is cheaper.

Starting from a filament it is possible to provide, with a method according to the ones above mentioned, net meshes of any shape and size, differently from what can be obtained with the die.

Storage volumes are reduced also because it is possible to store the backing sheet on its own and move it from storage only at the time of the deposition of the extruded elements for providing the packagings. The backing sheet rolled up in a roll occupies a smaller volume than a film for a packaging such as the ones described previously, because the individual winding has a lower thickness, since there are no mesh portions and/or other elements.

Moreover, depending on the shape of the open region 12, it is possible to provide a mesh portion 15, the perimetric edge of which traces it as much as possible in order to limit the consumption of base plastic material 19.

Moreover, by extruding granules of plastic material directly one obtains a considerable saving in terms of costs and energy, since it is not necessary to provide filaments that then have to be melted again.

Another one of the advantages of the invention resides in that by printing the extruded elements 13 directly on the backing sheet 11 it is possible to reduce the material necessary for production, since the extruded elements 13 can be made thinner and lighter than that it is obtained with a die. This aspect is linked to the fact that the extruded elements 13 of the invention are deposited directly on the backing sheet 11 and are thus supported immediately by it and do not need to be rolled up and reprocessed afterwards.

Furthermore, the extruded elements 13 can assume the shapes of small, narrow and wide strips in order to increase the covering effect while maintaining a low weight: this is not possible with known production techniques.

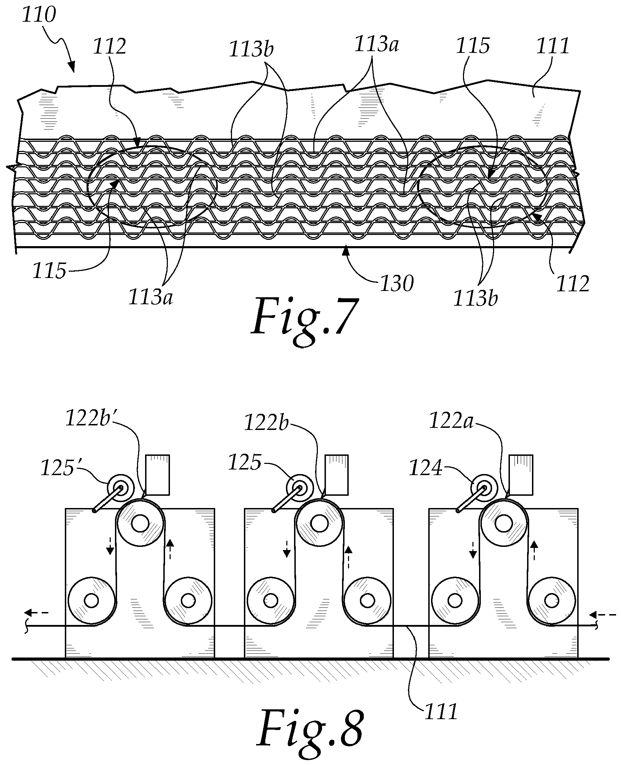

Figure 7 shows a portion of a film 110 according to a particular embodiment.

The film 110 comprises a backing sheet 111, similar to the one of the embodiment described previously, which has at least one open region 112 similar to the ones cited above.

The film 110 comprises a plurality of extruded elements 113a, 113b.

These extruded elements are provided by means of a sort of three-dimensional printer that comprises a plurality of nozzles that can move in one, two or three dimensions and are adapted to extrude these extruded elements.

In particular, these extruded elements are of two types:
- longitudinal extruded elements 113a,
- non-longitudinal extruded elements 113b.

The expression "longitudinal extruded elements", in the present description, is understood to refer to elements that have an axis of extension that is parallel to the axis of extension of the film.

The expression "non-longitudinal extruded elements", in the present description, is understood to refer to elements that have an axis of extension with a variable orientation or which in any case is not parallel to the axis of extension of the film.

The non-longitudinal extruded elements 113b have for example an undulated shape, as shown in Figure 7, or a zigzag shape.

The extruded elements 113a, 113b form a mesh portion 115 at the open region 112.

In this case the presence of longitudinal extruded elements 113a is necessary in order to fix the shape variation of the non-longitudinal elements 113b at the open region 112.

The non-longitudinal extruded elements 113b are in fact superimposed on the longitudinal extruded elements 113a during deposition and are heat-sealed only thereon in the open region 112.

In a constructive variation, not shown in the figures, there are no longitudinal extruded elements 113a, but there are only non-longitudinal extruded elements 113b with a zigzag shape between one edge and the other of the open region 112.

In this case the variation of the shape of the individual non-longitudinal extruded elements 113b occurs on the backing sheet 111, proximate to an edge of the open region 112, and these do not have shape variation at the open region 112. By doing so, the non-longitudinal extruded elements 113b are heat-sealed and fix the shape variation directly on the backing sheet 111.

In this constructive variation, the backing sheet 111 can be constituted by continuous longitudinal strips, optionally bearing a drawing or logo, interleaved by open regions, at which non-longitudinal elements 113b with a zigzag shape are extruded.

In a further constructive variation, not shown in the figures, the backing sheet is constituted by longitudinal strips interleaved by open regions, at which non-longitudinal elements 113b, which have an undulated shape and mutually intersect, are extruded.

It is thus possible to obtain a film that has a backing sheet constituted by longitudinal strips which are arranged in a parallel manner, with a width even of one millimeter, interleaved by open regions, comprising at the open regions a plurality of non-longitudinal extruded elements 113b, at least partially heat-sealed to the backing sheet strips, so as to provide a fully mesh-like film for packagings.

The strips that optionally constitute the backing sheet can be provided by cutting an initial sheet with a logo or a drawing superimposed thereon.

The non-longitudinal extruded elements 113b are provided by extruding plastic material through a plurality of nozzles aligned on a line that is parallel to the unrolling plane of the backing sheet 111.

In particular, the line nozzle oscillates between two end positions, along the direction defined between the longitudinal edges of the backing sheet 111, during the unrolling of the backing sheet 111 and the extrusion of the elements 113b.

The expression "longitudinal edges" is understood to refer to the edges of the backing sheet 111 that are parallel to its longitudinal axis of extension.

In Figure 7, one of the two longitudinal edges is designated by the reference numeral 130 and the other one, not shown in the figures, is arranged opposite.

The nozzle arrangement line can be:
- at right angles to the unrolling axis of the backing sheet 111, for the production of non-longitudinal extruded elements 113b with an undulated shape, such as those in Figure 7: in this case longitudinal elements 113a must be extruded previously;
- parallel to the unrolling axis of the backing sheet 111, for the production of non-longitudinal extruded elements 113b with a zigzag shape: in this case it is not necessary, but anyway possible, to extrude longitudinal elements 113a beforehand;
- at right angles to the unrolling axis of the backing sheet 111, for the production of non-longitudinal extruded elements 113b with a zigzag shape: in this case, if multiple nozzle lines are arranged close enough and all or only some of them move in a zing-zag pattern, it is not necessary, but still possible, to extrude longitudinal elements 113a beforehand.

Advantageously, a method for providing the film shown in Figure 7 entails that the individual extruded elements 113a, 113b are extruded by means of nozzles 122a, 122b, 122b' arranged in successive stations.

Thus, it is possible to obtain any desired design, such as for example the mesh portion 115, in which the lines of said design are provided by distinct nozzles, in successive stations.

In this manner the times are reduced considerably with respect to the drawing of a mesh portion 115 provided in a single station.

This is due to the fact that with a method with multiple stations each nozzle provides repeatedly an extruded element that corresponds to a single line of the design; the nozzle thus performs cyclically a same movement.

In a method for obtaining the same design, but in a single station, the nozzle will have to perform various movements, even mutually distinct ones, in order to provide the different lines, and this will necessarily entail longer production times.

With a production method performed in multiple stations the times are reduced at least by half, but even up to one tenth.

A production method, not shown in the figures, of the film shown in Figure 7 consists in:
- making a backing sheet 111, which has at least one open region 112, slide around a main roller, around which multiple movable nozzle lines are arranged which are adapted to provide, in subsequent steps, the extruded elements 113a, 113b,
- pressing the extruded elements 113a, 113b immediately after extrusion, by means of corresponding secondary rollers in order to fix them to the backing sheet 111.

The step of pressing the extruded elements 113a, 113b immediately after their extrusion is used mainly to define and fix the undulation and/or the lines of the design of the mesh portion.

The pressing rollers can be replaced with alternative pressing means, such as for example pressers.

A method for providing the film shown in Figure 7 is shown schematically, in a side view, in Figure 8 and consists in:
- bringing a backing sheet 111, having at least one open region 112, at a first fixed line of nozzles 122a connected to an extruder,
- extruding, through the first line of nozzles 122a, a plurality of longitudinal extruded elements 113a at least proximate to and/or at the open region 112,
- pressing the longitudinal extruded elements 113a by means of corresponding rollers 124 in order to fix them to the backing sheet 111, obtaining a sheet with longitudinal extruded elements,
- bringing the sheet with longitudinal extruded elements at a second oscillating line of nozzles 122b connected to an extruder,
- providing, by means of the second extruding and oscillating line of nozzles 122b, a plurality of first non-longitudinal extruded elements 113b at least proximate to and/or at the open region 112,
- pressing the first non-longitudinal extruded elements 113b by means of corresponding rollers 125 in order to fix them to the backing sheet 111 and/or to the longitudinal extruded elements 113a, obtaining a sheet with first non-longitudinal extruded elements,
- bringing the sheet with first non-longitudinal extruded elements at a third line of nozzles 122b', which oscillates in an offset manner with respect to the second line of nozzles 122b, said nozzles 122b being connected to an extruder,
- providing, by means of the third extruding and oscillating line of nozzles 122b', a plurality of second non-longitudinal extruded elements 113b at least proximate to and/or at the open region 112,
- pressing the second non-longitudinal extruded elements 113b by means of corresponding rollers 125' in order to fix them to the backing sheet 111 and/or to the longitudinal extruded elements 113a and/or to the first non-longitudinal extruded elements 113b, obtaining the film 110.

The extruded elements 113a, 113b that exit the nozzles 122a, 122b, 122b' are at a high enough temperature to be able to melt locally, at least partially, with the underlying layer.

During the provision of the film 10, 110, it is possible to accelerate the unrolling of the backing sheet 11, 111 between one open region 12, 112 and the following one, even to the point of breaking the extruded elements 13, 113a, 113b, in order to extrude said elements 13, 113a, 113b only proximate to and/or at the open regions, avoiding to extrude the elements 13, 113a, 113b where it is not necessary, at the same saving time material and speeding up production.

The heat-sealing between extruded elements and backing sheet occurs only in limited portions of the backing sheet, producing a pleasant visual impact.

The extruded elements are heat-sealed to the backing sheet and, differently from what occurs in similar films of the known type, the thickness of the film is more uniform.

Again, by virtue of the production versatility ensured by the use of the three-dimensional printer, the extruded elements can be deposited on a portion of the backing sheet, even with a thickness that is different from the one that they have at a mesh portion, in order to ensure a greater strength of the packaging and reinforce it in places where it is necessary.

It should be noted that the use of bioplastics and/or biodegradable and/or compostable materials allows to reduce the environmental impact.

It should also be noted that the use of a three-dimensional printer eliminates the presence of flaws deriving from die production.

In a manner similar to what has been described above, it is possible to provide a fully mesh-like film for packaging by extruding and superimposing extruded elements, without the use of a backing sheet and/or by using a backing sheet constituted by longitudinal strips and/or filaments, which are arranged in a parallel manner and are interleaved by one or more open regions.

In the first case, the film is constituted by a plurality of extruded elements obtained by direct deposition, with the extruded elements superimposed and at least partially heat-sealed in the overlapping points.

In a further constructive variation, not shown in the figures, a film for the production of packagings, according to the invention, comprises a backing sheet, and a plurality of extruded elements, associated at least partially with the backing sheet, provided by indirect deposition on said backing sheet.

The expression "indirect deposition" is understood to mean, in the present description, that the extruded element, exiting the nozzle, does not reach the backing sheet directly but, for example, arrives on a roller which spreads it and/or presses it onto the backing sheet.

In practice it has been found that the invention achieves the intended aim and objects, providing a film for manufacturing packagings that allows faster provision and a greater versatility in provision and use.

The invention thus conceived is susceptible of numerous modifications and variations, all of which are within the scope of the accompanying claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application no. 102018000006533, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A film (10, 110) for manufacturing packagings, comprising a backing sheet (11, 111), **characterized in that** it comprises a plurality of extruded elements (13, 113a, 113b), which are associated at least partially with said backing sheet (11, 111) and are provided by direct deposition on said backing sheet (11, 111).

2. The film (10, 110) according to claim 1, **characterized in that** said backing sheet (11, 111) has at least one open region (12, 112).

3. The film (10, 110) according to one or more of the preceding claims, **characterized in that** said extruded elements (13, 113a, 113b) are at least partly present at said at least one open region (12, 112), said extruded elements (13, 113a, 113b) being associated with said backing sheet (11, 111) proximate to the perimetric edges (16) of said at least one open region (12, 112).

4. The film (10, 110) according to one or more of the preceding claims, **characterized in that** said extruded elements (13, 113a, 113b) that are present at said at least one open region (12, 112) are arranged so as to form at least one mesh portion (15, 115).

5. The film (10) according to one or more of the preceding claims, **characterized in that** said elements (13) are adapted to provide handles (14) and/or gadgets and/or complementary elements for openings that can be closed again and/or laces.

6. The film (10, 110) according to one or more of the preceding claims, **characterized in that** said backing sheet (11, 111) and said extruded elements (13, 113a, 113b) are made of materials that can be heat-sealed to each other.

7. The film (10, 110) according to one or more of the preceding claims, **characterized in that** said backing sheet (11) is made of plastic and/or paper and/or similar material, preferably bioplastics and/or recyclable and/or biodegradable and/or compostable material, and **in that** said extruded elements (13, 113a, 113b) are made of plastic material, preferably bioplastics and/or recyclable and/or biodegradable and/or compostable material.

8. The film (10) according to one or more of the preceding claims, **characterized in that** it comprises an adhesive between said backing sheet (11) and said extruded elements (13).

9. The film (10) according to one or more of the preceding claims, **characterized in that** it comprises an adhesive which is mixed with a base polymer of said extruded elements (13).

10. The film (10) according to one or more of the preceding claims, **characterized in that** said backing sheet (11) is constituted by a plurality of strips (24) which are arranged in a parallel manner and are interleaved by said open region (12).

11. A method for providing a film (10) according to one or more of the preceding claims, comprising the steps that consist in:
- providing said backing sheet (11) and rolling it up in a roll (17),
- unrolling said roll (17), making said backing sheet (11) pass through at least one three-dimensional printer (18),
- making at least one base plastic material (19) pass through at least one extruder (21) of said at least one printer (18), said extruder (21) comprising heating means (20),
- melting said at least one base plastic material (19) by virtue of said heating means (20) and extruding it through at least one terminal nozzle (22) of said at least one extruder (21), forming at least one extruded element (13),
- depositing said at least one extruded element (13) on said backing sheet (11), heat-sealing it at least partially thereto, said at least one extruded element (13) having a temperature that is high enough to be able to melt locally, at least partially, with said backing sheet (11),
- rolling up said film (10) thus obtained in a roll after the hardening of said at least one extruded element (13).

12. The method for providing a film (10) according to claim 11, **characterized in that** said backing sheet (11) is subjected to an operation for providing at least one open region (12), which passes through the thickness of said backing sheet (11), before passing through said printer (18).

13. The method for providing a film (10) according to claim 12, **characterized in that** the operation of depositing said at least one extruded element (13) occurs at said at least one open region, associating said at least one extruded element (13) with said backing sheet (11) proximate to the perimetric edges (16) of said at least one open region (12).

14. The method for providing a film (10) according to one or more of claims 11 to 13, **characterized in that** said backing sheet (11) is spread locally with a heat-resistant ink before said backing sheet (11) is made to pass through said at least one printer (18).

15. The method for providing a film (10) according to one or more of claims 11 to 14, **characterized in that** said backing sheet (11) is made to slide on a belt in contact with a cooled surface (25) during the deposition of said at least one extruded element (13).

16. The method for providing a film (10) according to one or more of claims 11 to 15, **characterized in that** the distance between said at least one nozzle (22) and said backing sheet (11) is comparable to the thickness of said deposited extruded element (13).

17. The method for providing a film (10) according to claim 16, **characterized in that** said distance is adjusted at each pass, so as to remain constant between said at least one nozzle (22) and the previously deposited layer.

18. The method for providing a film (10) according to one or more of claims 1 to 10, comprising the steps that consist in:
- providing said backing sheet (11) and rolling it up in a roll (17),
- unrolling said roll (17), making said backing sheet (11) pass through at least one three-dimensional printer (18),
- extruding at least one element (13) through at least one extruder (21) of said at least one printer (18),
- associating said at least one extruded element (13) with said backing sheet (11) by means of the application and/or mixing of an adhesive on said at least one extruded element (13) and/or on said backing sheet (11), at least in the portions of contact with said at least one extruded element (13).

19. The method for providing a film (10) according to claim 18, **characterized in that** said backing sheet (11) is subjected to an operation for providing at least one open region (12), which passes through the thickness of said backing sheet (11), before passing through said printer (18).

20. The method for providing a film (110) according to one or more of claims 1 to 10, **characterized in that** said extruded elements (113a, 113b), are provided by means of nozzles (122a, 122b, 122b') arranged in subsequent stations.

21. The method for providing a film (110) according to claim 20, which consists in:
- bringing a backing sheet (111), having at least one open region (112), at a first fixed line of nozzles (122a) connected to an extruder,
- extruding, through said first line of nozzles (122a), a plurality of longitudinal extruded elements (113a) at least proximate to and/or at said at least one open region (112),
- pressing said longitudinal extruded elements (113a) by means of corresponding rollers (124) in order to fix them to said backing sheet (111), obtaining a sheet with longitudinal extruded elements,
- bringing said sheet with longitudinal extruded elements at a second oscillating line of nozzles (122b) connected to an extruder,
- providing, through said second extruding and oscillating line of nozzles (122b), a plurality of first non-longitudinal extruded elements (113b) at least proximate to and/or at said at least one open region (112),
- pressing said first non-longitudinal extruded elements (113b) by means of corresponding rollers (125) in order to fix them to said backing sheet (111) and/or to said longitudinal extruded elements (113a), obtaining a sheet with first non-longitudinal extruded elements,
- bringing said sheet with first non-longitudinal extruded elements at a third line of nozzles (122b'), which oscillates in an offset manner with respect to said second line of nozzles (122b), said nozzles (122b) being connected to an extruder,
- providing, through said third extruding and oscillating line of nozzles (122b'), a plurality of second non-longitudinal extruded elements (113b) at least proximate to and/or at said at least one open region (112),
- pressing said second non-longitudinal extruded elements (113b) by means of corresponding rollers (125') in order to fix them to said backing sheet (111) and/or to said longitudinal extruded elements (113a) and/or to said first non-longitudinal extruded elements (113b), obtaining said film (110).

22. A fully mesh-like film for packaging, **characterized in that** it comprises:
- a backing sheet constituted by longitudinal strips and/or filaments, which are arranged in a parallel manner and are interleaved by one or more open regions,
- a plurality of extruded elements, associated at least partially with said backing sheet, said extruded elements being provided by direct deposition on said backing sheet at said one or more open regions to form at least one mesh portion.

23. A film for manufacturing packagings comprising a backing sheet, **characterized in that** it comprises a plurality of extruded elements, which are associated at least partially with said backing sheet and are provided by indirect deposition on said backing sheet.
